Europäisches Patentamt

European Patent Office

Office européen des brevets

(11) Veröffentlichungsnummer: **0 220 716 B1**

(12) **EUROPÄISCHE PATENTSCHRIFT**

(45) Veröffentlichungstag der Patentschrift: **01.06.94**

(21) Anmeldenummer: **86114955.7**

(22) Anmeldetag: **28.10.86**

(51) Int. Cl.5: **C03C 17/34**, G02B 1/10, G02B 5/28

(54) **Dekorierter Gegenstand.**

(30) Priorität: **29.10.85 DE 3538415**

(43) Veröffentlichungstag der Anmeldung:
**06.05.87 Patentblatt 87/19**

(45) Bekanntmachung des Hinweises auf die
Patenterteilung:
**01.06.94 Patentblatt 94/22**

(84) Benannte Vertragsstaaten:
**CH FR GB IT LI SE**

(56) Entgegenhaltungen:
**EP-A- 0 165 021**
**GB-A- 2 121 075**

**PATENT ABSTRACTS OF JAPAN; unexamined applications, C Feld, Band 9, Nr. 254, 11.
October 1985 THE PATENT OFFICE JAPANE-
SE GOVERNMENT Seite 87C**

**PATENT ABSTRACTS OF JAPAN, unexamined applications, C Feld, Band 6, Nr. 131, 17.
Juli 1982 THE PATENT OFFICE JAPANESE
GOVERNMENT Seite 65 C**

(73) Patentinhaber: **Biedermann, Andreas**
**Magenbuch 128**
**D-88356 Ostrach(DE)**

(72) Erfinder: **Biedermann, Andreas**
**Magenbuch 128**
**D-88356 Ostrach(DE)**

(74) Vertreter: **Patentanwälte Dipl.-Ing. E. Eisele**
**Dr.-Ing. H. Otten**
**Seestrasse 42**
**D-88214 Ravensburg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung bezieht sich auf Gegenstände, deren Aeusseres zur Erzielung einer ästhetischen Wirkung in bestimmter Weise ausgestaltet ist.

Die Erfindung betrifft insbesondere einen dekorierten Gegenstand, welcher einen transparenten Körper aufweist, auf dessen Oberfläche ein Schichtsystem zur Erzeugung von Interferenzeffekten vorgesehen ist.

In der Optik ist es seit langem üblich, Interferenzschichten und Schichtsysteme auf den Oberflächen optischer Komponenten einzusetzen, um die optischen Eigenschaften der beschichteten Körper gezielt zu beeinflussen. Beispiele hierfür sind entspiegelte Gläser, Laserspiegel, Strahlteiler oder optische Filter.

Andererseits ist es auch seit langem bekannt, dass bei der Interferenz an dünnen Schichten, die für sich genommen farblos sind, Farbphänomene auftreten, wie z.B. das farbige Schillern von dünnen Oelfilmen, Seifenblasen oder den sogenannten Anlassfarben.

Es sind nun verschiedentlich Vorschläge gemacht worden, diese auf Dünnschicht-Interferenz beruhenden Farbphänomene bewusst einzusetzen, um irgendwelchen Gegenständen ein dekoratives Aussehen zu verleihen. Hierbei ist von entscheidender Bedeutung, welche optischen Eigenschaften der Gegenstand als Träger der Interferenzschichten aufweist.

So ist beispielsweise in der DE-A-26 58 645 erkannt worden, dass es insbesondere auf transparenten oder teilweise absorbierenden Substraten schwierig ist, durch das Aufbringen von Interferenzschichten Farben mit einem vorgegebenen Farbton und einer ausreichenden Farbsättigung oder Farbdichte zu erzielen.

Dieses Problem der fehlenden "Farbtiefe" bei transparenten Substraten bzw. Körpern wird in der genannten Druckschrift dadurch gelöst, dass zwischen dem Substrat und der einen Interferenzschicht eine teilreflektierende Metallschicht angeordnet wird.

Mit der eingefügten Metallschicht lassen sich zwar intensive Dünnschicht-Interferenzfarben erzeugen, jedoch wird diese dekorative Wirkung zu Lasten der Transparenz des Gegenstandes insgesamt erreicht, so dass neben der Einfärbung das ganze optische Erscheinungsbild des Gegenstandes verändert wird.

Eine andere bekannte Art der Farbdekoration durch Dünnschicht-Interferenz geht generell von einem undurchsichtigen Siliziumsubstrat aus, auf das eine transparente Oberschicht aus z.B. $SiO_2$ aufgebracht wird (DE-A-34 22 356). Das obengenannte Problem der fehlenden "Farbtiefe" tritt bei dieser Art der Dekoration wegen der speziellen Substratbeschaffenheit überhaupt nicht auf. Auf der anderen Seite führt die Anwendung dieser Dekorationstechnik bei transparenten Gegenständen dazu, dass die Transparenz vollständig verloren geht.

Aus der CH-A-403 577 ist es bekannt, Schmuckgegenstände durch ein Interferenzschichtsystem mit einem Farbeffekt auszustatten, wobei zwischen dem aus Glas oder Kunststoff bestehenden Gegenstand und dem aus mehreren Interferenzschichten bestehenden Schichtsystem eine lichtstreuende oder diffus reflektierende Fläche angeordnet wird. Obgleich bei dieser Lehre auf das Problem der fehlenden Farbtiefe gar nicht eingegangen wird, kann diese Anordnung in ihrer Wirkung mit der aus der DE-A-26 58 645 bekannten verglichen werden. Auch hier wird die Farbwirkung mit einem Verlust an Transparenz erkauft.

Die nachveröffentlichte EP-A-165 021 beschreibt eine symbolerzeugende optische Interferenzvorrichtung zum Echtheitsnachweis, bei der auf einem komponenten Substrat mehrere Interferenzschichten übereinander aufgebracht sind.

Allen bisher beschriebenen Lehren ist also gemeinsam, dass sie bei transparenten Gegenständen eine Farbdekoration nur auf Kosten der Durchsichtigkeit des Gegenstandes erzielen.

Darstellung der Erfindung

Aufgabe der vorliegenden Erfindung ist es nun, einen dekorierten Gegenstand zu schaffen, bei dem auf einem transparenten Körper ein Schichtsystem zur Erzeugung von Interferenzeffekten vorgesehen ist und bei dem das Problem der fehlenden Farbtiefe umgangen wird, ohne die Durchsichtigkeit des Gegenstandes zu verringern.

Die Aufgabe wird bei einem dekorierten Gegenstand der eingangs genannten Art dadurch gelöst, dass
(a) das Schichtsystem eine Folge von wenigstens drei Interferenzschichten wechselnder Brechzahl umfasst, oder eine Schicht mit in Richtung senkrecht zur Oberfläche stetig variierender Brechzahl umfasst, welche Schicht näherungsweise als Folge von wenigstens drei Interferenzschichten wechselnder Brechzahl aufgefasst werden kann,
(b) das Schichtsystem direkt auf der Oberfläche des transparenten Körpers angeordnet ist, und
(c) die beschichtete Oberfläche des transparenten Körpers in eine Mehrzahl von Oberflächenbereichen unterteilt ist, in denen die Dicke und/oder die Brechzahl wenigstens einer der Interferenzschichten jeweils

einen andeien Wert annimmt.

Der Kern der Erfindung besteht darin, für die dekorative Wirkung im wesentlichen die Kontraste zwischen verschiedenen Oberflächenbereichen des Gegenstandes auszunutzen, die dadurch entstehen, dass die Schichtsysteme der einzelnen Oberflächenbereiche unterschiedliche optische Eigenschaften aufweisen. Ueberraschenderweise lässt sich diese Kontrastwirkung mit einer Schichtfolge von wenigstens drei Interferenzschichten erzielen, obwohl in den einzelnen Oberflächenbereichen für sich genommen eine ausreichende "Farbtiefe" fehlt.

Die Erfindung soll nachfolgend anhand von Ausführungsbeispielen im Zusammenhang mit der Zeichnung näher erläutert werden. Es zeigen:

Fig.1 schematisch die Intensitätsverhältnisse bei einen transparenten Körper, der einem Lichteinfall von zwei Seiten ausgesetzt ist,

Fig.2A und 2B bekannte Anordnungen zur Erzielung von Interferenz-Farbeffekten,

Fig.3 eine Interferenzschicht-Anordnung wie sie Grundlage des erfindungsgemässen Gegenstandes ist,

Fig.4A die Spektralverteilung der reflektierten Intensität in relativen Einheiten für eine Anordnung gemäss Fig.2A,

Fig.4B zum Vergleich die entsprechende Spektralverteilung für eine Anordnung gemäss Fig.3,

Fig.5 Ausführungsbeispiele für den erfindungsgemässen dekorierten Gegenstand,

Fig.6A-C Brechzahl-Profile für verschiedene Schnitte durch das Schichtsystem der Fig.5,

Fig.7 zwei Reflektionskurven für Schichtsysteme gemäss Fig.5 mit gleichbleibenden Brechzahlen, aber unterschiedlichen Schichtdicken,

Fig.8 eine Interferenzschicht-Anordnung mit stetig variierender Brechzahl, und

Fig.9 das Brechzahlprofil der Anordnung aus Fig.8 mit der Approximation durch drei Interferenzschichten.

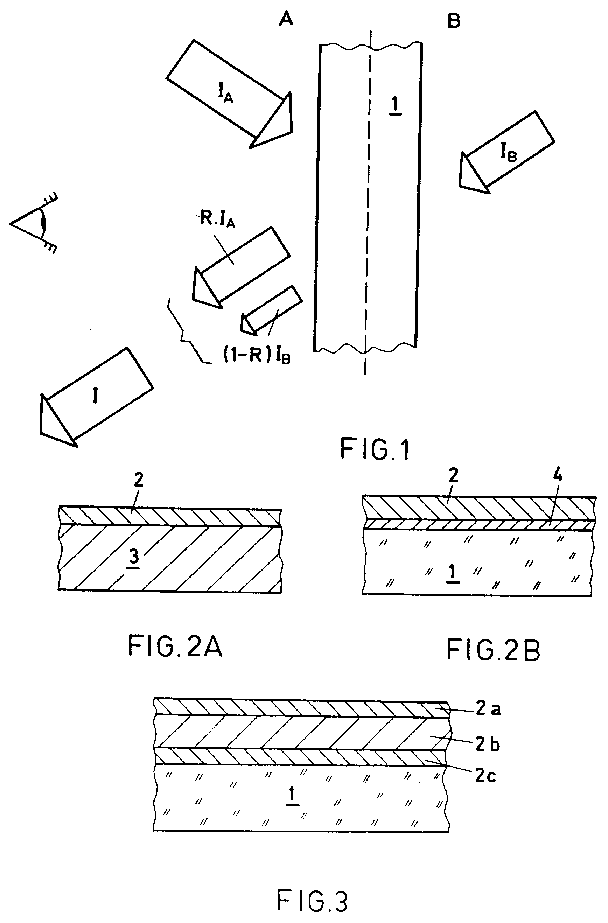

Das der Erfindung zugrundeliegende Problem kann leicht mit Hilfe der schematischen Darstellung aus Fig.1 erläutert werden. Ein transparenter Körper 1 mit flächenhafter Ausdehnung und endlicher Dicke und einem Reflexionsvermögen R wird bei üblichen Beleuchtungsverhältnissen von zwei Seiten A und B mit einem Lichteinfall der Intensität $I_A$ bzw. $I_B$ beaufschlagt. Mit A sei hierbei die äussere Seite des transparenten Körpers 1 gemeint, die dem Betrachter (angedeutet durch das Augensymbol) zugewandt ist.

Von der von aussen auftreffenden Lichtintensität $I_A$ wird - wenn der transparente Körper 1 als absorptionsfrei angenommen wird - der Bruchteil $R.I_A$ zum Betrachter zurückreflektiert.

Von der von innen (Seite B) auftreffenden Lichtintensität $I_B$ wird entsprechend der Bruchteil $R.I_B$ nach innen zurückreflektiert. Der komplementäre Anteil $(I-R).I_B$ dagegen durchläuft den transparenten Körper 1 und addiert sich zu dem Anteil $R.I_A$, um eine insgesamt nach aussen abgegebene Intensität I mit

$$I = R.I_A + (I-R)I_B = R.(I_A-I_B) + I_B \qquad (1)$$

zu bilden.

Wenn nun der transparente Körper 1 einem gleichmässigen Lichteinfall von allen Seiten ausgesetzt ist ($I_A = I_B$), verschwindet der vom Reflexionsvermögen R abhängige Anteil aus (1). Ein auf die Oberfläche des transparenten Körpers 1 aufgebrachtes Interferenz-Schichtsystem, welches einen bestimmten spektralen Verlauf des Reflexionsvermögens R erzeugt, hat dann keinen Einfluss auf die Intensitätsverteilung. Infolge davon ist aber auch kein Farbeffekt für den Beobachter feststellbar.

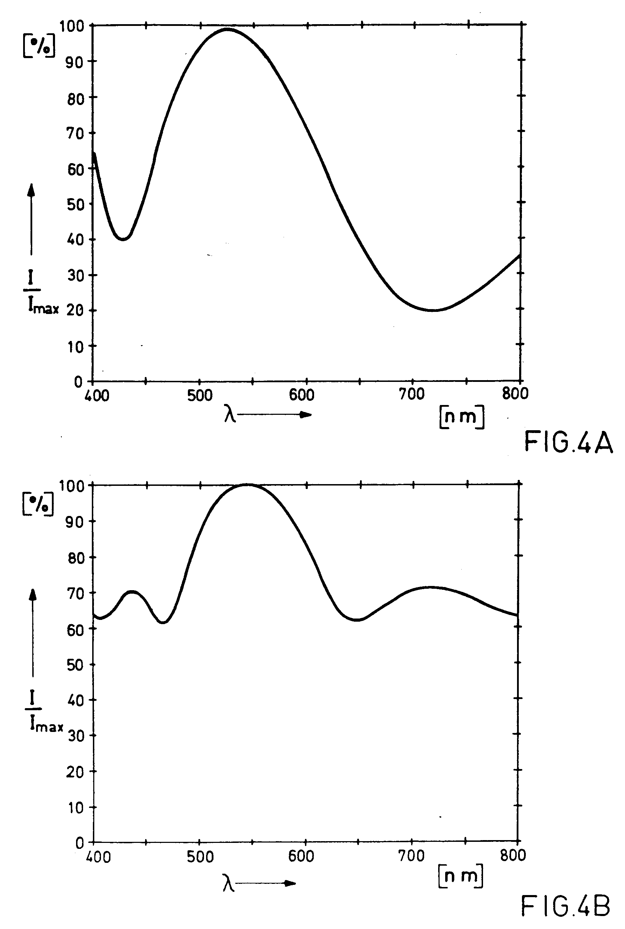

Auch in dem Fall, dass von der Seite A Licht mit doppelter Intensität einfällt, wie von der entgegengesetzten Seite B, entstehen nur blasse Farben. Eine für diese Intensitätsverhältnisse berechnete spektrale Intensitätsverteilung, der ein 3-schichtiges Interferenz-Schichtsystem zugrunde liegt, ist in Fig.4B wiedergegeben (in relativen Einheiten $I/I_{max}$). Die spektrale Variation der Intensität beträgt hierbei weniger als 40%, während sie bei vergleichbaren Interferenzschichten mit kräftigem Farbeffekt (Fig.4A) bei maximal 80% liegt. Auf Einzelheiten dieser Spektralverteilungen wird nachfolgend noch näher eingegangen.

Die gerade beschriebene, bei einem transparenten Körper 1 in Erscheinung tretende fehlende "Farbtiefe" tritt nicht auf, wenn eine Interferenzschicht 2, wie in Fig.2A dargestellt, auf die Oberfläche eines opaken Siliziumsubstrats 3 aufgebracht wird, wie dies aus der bereits erwähnten DE-OS 34 22 356 bekannt ist.

Bei der bekannten Anordnung gemäss Fig.2A fällt ausschliesslich reflektiertes Licht auf den Betrachter. Bereits mit einer einzigen Interferenzschicht 2 können deshalb, in Abhängigkeit von der Schichtdicke, kräftige Interferenzfarben erzeugt werden. Berechnet man für diese Anordnung die spektrale Intensitätsverteilung mit den folgenden Parametern:

Einfallswinkel : O°

Dicke der Interferenzschicht 2 : 360 nm
Brechzahl der Umgebung : 1
Brechzahl der Interferenzschicht 2 : 1,5
Substrat: Si, amorph; Dispersion linear interpoliert

erhält man die Kurve aus Fig.4A, deren grosse spektrale Variation ein Mass für die Kräftigkeit der Farbe (Farbtiefe) ist.

Solcherart erzeugte Interferenzfarben können bei der Dekoration wie auf die Oberfläche aufgebrachte Farbschichten herkömmlicher Art eingesetzt werden. So ist in der genannten Druckschrift auch vorgeschlagen worden, mehr farbige Flächen mit bild-, schrift- oder musterartigen Kontrasten zu erzeugen, indem die Dicke der Interferenzschicht 2 entsprechend lateral verändert wird. Auf diese Weise werden angrenzende Flächen mit unterschiedlichen kräftigen Farben ausgebildet.

Eine vollkommen andersartige Situation liegt jedoch vor, wenn die Interferenzschicht 2 auf einen transparenten Körper 1 aufgebracht wird (Fig.2B), der aus Glas oder einem durchsichtigen Kunststoff besteht. Ohne zusätzliche Massnahmen entstehen nur blasse, pastellartige Farben geringer "Farbtiefe", die für eine dekorative Ausgestaltung des Gegenstandes keine grössere Bedeutung gewinnen können.

Eine ausreichende Farbtiefe kann unter diesen Voraussetzungen z.B. durch das Einschieben einer metallischen, teilreflektierenden Reflexionsschicht 4 zwischen die Oberfläche des transparenten Körpers 1 und die Interferenzschicht 2 erhalten werden. Naturgemäss führt dieses Vorgehen jedoch zu einer deutlichen Verschlechterung der Durchsichtigkeit des Gegenstandes, zu dem der transparente Körper 1 gehört.

Die Erfindung geht nun von der in Fig.3 wiedergegebenen Konfiguration aus, bei der wenigstens 3 Interferenzschichten 2a, 2b und 2c direkt auf der Oberfläche des transparenten Körpers 1 angeordnet sind, und ein Interferenz-Schichtsystem mit wechselnden Brechzahlen bilden.

Für sich genommen löst eine solche Konfiguration das Problem der fehlenden "Farbtiefe" nicht. Berechnet man nämlich für folgende Parameter:

| Einfallswinkel | $O°$ |
|---|---|
| Dicke der Interferenzschichten 2a,2c | 170 nm |
| Dicke der Interferenzschicht 2b | 270 nm |
| Brechzahl der Umgebung | 1 |
| Brechzahl der Interferenzschichten 2a,2c | 2,4 |
| Brechzahl der Interferenzschicht 2b | 1,5 |
| Brechzahl des transparenten Körpers 1 | 1,52 |

$I_A / (I_A + I_B) = 2/3$

$I_B / (I_A + I_B) = 1/3$

die spektrale Intensitätsverteilung, erhält man die vergleichsweise wenig variierende Kurve der Fig.4B, die auf eine nur geringe "Farbtiefe" schliessen lässt.

Im Unterschied zum Stand der Technik löst die Erfindung nicht das bei transparenten Körpern vorhandene Problem der fehlenden "Farbtiefe". Sie beschreitet einen völlig anderen Weg: Die Erfindung umgeht das "Farbtriefen"-Problem indem sie auf Interferenzfarben als isolierte dekorative Elemente verzichtet, und den dekorativen Effekt mit kontrastierenden optisch unterschiedlich ausgelegten Oberflächenbereichen erzielt.

Obgleich in jedem Oberflächenbereich nur blasse Interferenzfarben entstehen, lässt sich überraschenderweise ein ausgezeichneter dekorativer Effekt über den Kontrast realisieren, wenn ein Schichtsystem mit wenigstens 3 Interferenzschichten verwendet wird.

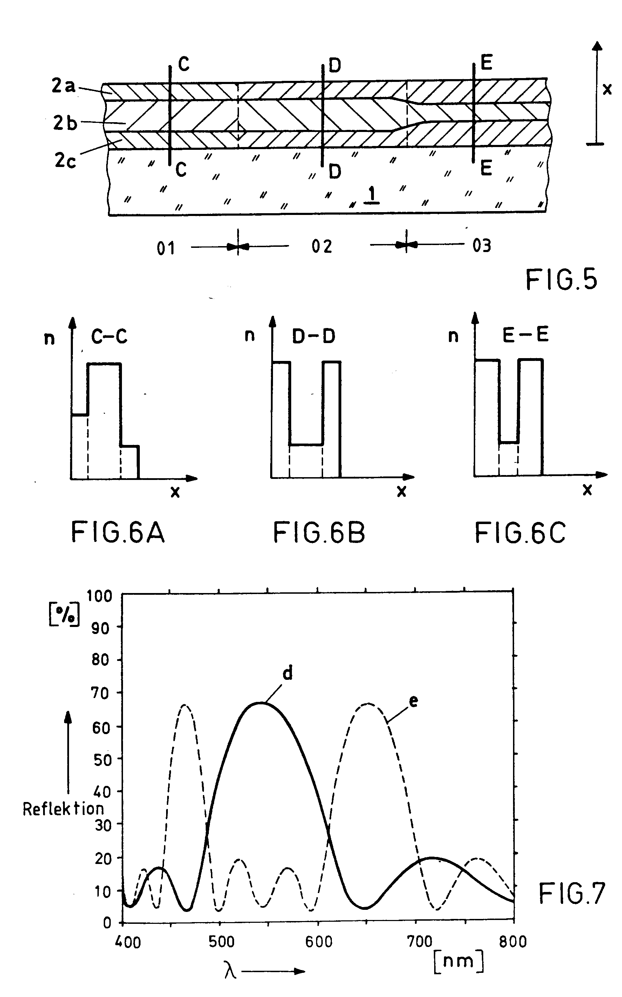

Dies soll anhand des Beispiels aus Fig.5 erläutert werden. Die Figur zeigt einen Ausschnitt aus einem grösserflächigen Gegenstand mit dem bereits erwähnten transparenten Körper 1, und einem Schichtsystem aus den wenigstens drei Interferenzschichten 2a, 2b und 2c.

Das Schichtsystem ist in eine Mehrzahl von Oberflächenbereichen O1, O2, O3 unterteilt. Innerhalb jedes der Oberflächenbereiche O1, O2, O3 haben die Interferenzschichten 2a, 2b, 2c weitgehend gleichbleibende Eigenschaften (Dicke, Brechzahl). Von einem Oberflächenbereich zum nächsten ändert sich mindestens eine Eigenschaft wenigstens einer der drei Interferenzschichten 2a, 2b, 2c. Ueblicherweise ändern alle drei Interferenzschichten ihre Dicke und/oder ihre Brechzahl.

Verdeutlicht wird dies an den in Fig.6A-6C dargestellten Profilen der Brechzahl n entlang einer Ortskoordinate x, die in Fig.5 eingezeichnet ist. Jedes Brechzahl-Profil gehört zu einem entsprechenden Schnitt (C-C, D-D, E-E), der in Fig.5 durch jeweils einen der Oberflächenbereiche O1, O2, O3 gelegt ist.

Man erkennt an den Brechzahl-Profilen, dass z.B. beim Uebergang vom Oberflächenbereich O1 zum benachbarten Oberflächenbereich O2 die Dicken aller Interferenzschichten unverändert bleiben, jedoch die Brechzahlen variieren (Fig.6A - Fig.6B). Beim Uebergang vom Oberflächenbereich O2 zum Oberflächenbereich O3 bleiben dagegen alle Brechzahlen konstant, während sich die Schichtdicken verändern (Fig.6B - Fig.6C). Beliebige andere Kombinationen aus Dicke und Brechzahlvariation sind ebenso möglich.

Dass mit kontrastierenden Oberflächenbereichen tatsächlich gut sichtbare dekorative Effekte erzielt werden können, sollen die beiden Spektralkurven für die Reflektion für zwei unterschiedlich gestaltete Oberflächenbereiche aus Fig.7 verdeutlichen. Die durchgezogene Kurve d geht dabei von denselben Parametern aus wie Fig.4B, ohne allerdings einen zweiseitigen Lichteinfall zu berücksichtigen.

Die strichlierte Kurve e hat demgegenüber gleiche Brechzahlen, aber geänderte Dickenverhältnisse:

| | |
|---|---|
| Dicke der Interferenzschichten 2a, 2c | 340 nm |
| Dicke der Interferenzschicht 2b | 540 nm. |

Gut getrennt im Spektrum sind die jeweiligen Maxima in der reflektierten Intensität. Entsprechend gut sind auch die zugehörigen Kontrastverhältnisse.

Als Material für den transparenten Körper 1 wird vorzugsweise Glas eingesetzt. Geeignet sind aber auch durchsichtige Kunststoffe.

Für die Interferenzschichten 2a,2b,2c kann mit guten Ergebnissen Siliziumdioxid (Brechzahl n = 1,5) oder Titanoxid (Brechzahl n = 2,4) oder eine Mischung aus beiden Oxiden verwendet werden.

Das Aufbringen der Interferenzschichten auf die Oberfläche des transparenten Körpers lässt sich mit allen bekannten für solche dünnen Schichten geeigneten Beschichtungsverfahren durchführen.

Wie weiter vorne bereits erwähnt worden ist, geht die Erfindung grundsätzlich von einer Konfiguration mit wenigstens drei Interferenzschichten 2,2b und 2c wechselnder Brechzahl n aus.

Diese wenigstens drei Interferenzschichten brauchen jedoch nicht, wie in Fig.3 oder Fig.5 gezeigt, eindeutige Grenzflächen mit einer unstetigen Aenderung in der Brechzahl aufzuweisen.

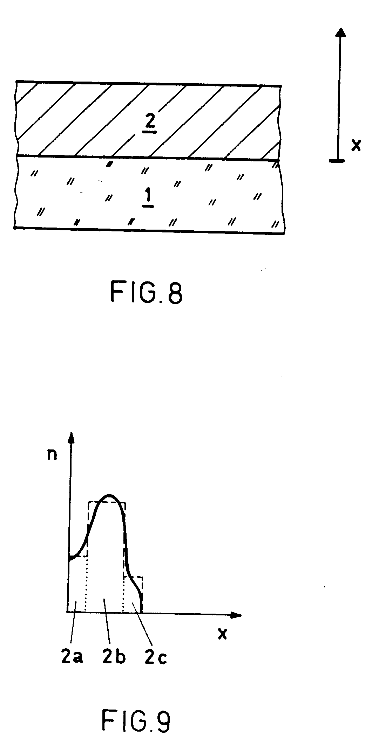

Vielmehr kann wie in den Figuren 8 und 9 dargestellt, das Schichtsystem auch nur eine einzige Interferenzschicht 2 umfassen, deren Brechzahl sich in der Richtung senkrecht zur Oberfläche zwar stetig ändert (durchgezogene Kurve in Fig.9), die jedoch näherungsweise als eine Folge von wenigstens drei separaten Interferenzschichten 2a,2b und 2c aufgefasst werden kann (gestrichelt in Fig.9). Ein solches Brechzahlprofil entspricht dann (in diesem Beispiel) im wesentlichen dem aus Fig.6A.

Die stetige Aenderung der Brechzahl n braucht hierbei nicht einmal unbedingt durch eine Mischung verschiedener Substanzen erzeugt zu werden. So kann beispielsweise Siliziumoxid in Abhängigkeit vom Temperaturzustand und/oder Oxidationsgrad Brechzahlen zwischen 1,5 und 1,9 annehmen.

Insgesamt liegt mit der Erfindung ein dekorierter Gegenstand vor, der eine auf Interferenzeffekten beruhende Dekoration aufweist, ohne an Durchsichtigkeit einzubüssen.

**Patentansprüche**

**Patentansprüche für folgende Vertragsstaaten : CH, FR, GB, LI**

1. Dekorierter Gegenstand, welcher einen transparenten Körper aus Glas (1) aufweist, auf dessen Oberfläche ein Schichtsystem zur Erzeugung von Interferenzeffekten vorgesehen ist, dadurch gekennzeichnet, dass

   (a) das Schichtsystem eine Folge von wenigstens drei Interferenzschichten (2a,2b,2c) wechselnder Brechzahl (n) umfasst,

   oder eine Schicht mit in Richtung senkrecht zur Oberfläche stetig variierender Brechzahl (n) umfasst, welche Schicht näherungsweise als Folge von wenigstens drei Interferenzschichten (2a,2b,2c) wechselnder Brechzahl (n) aufgefasst werden kann,

   (b) das Schichtsystem direkt auf der Oberfläche des transparenten Körpers (1) angeordnet ist, und

   (c) die beschichtete Oberfläche des transparenten Körpers (1) in eine Mehrzahl von Oberflächenbereichen (O1,O2,O3) unterteilt ist, in denen die Dicke und/oder die Brechzahl (n) wenigstens einer der Interferenzschichten (2a,2b,2c) jeweils einen anderen Wert besitzt.

2. Dekorierter Gegenstand nach Anspruch 1, dadurch gekennzeichnet, dass die Interferenzschichten (2a,2b,2c) aus Titanoxid oder Siliziumoxid oder einer Mischung aus diesen Oxiden bestehen.

**Patentansprüche für folgende Vertragsstaaten : IT, SE**

1. Dekorierter Gegenstand, welcher einen transparenten Körper (1) aufweist, auf dessen Oberfläche ein Schichtsystem zur Erzeugung von Interferenzeffekten vorgesehen ist, dadurch gekennzeichnet, dass
   (a) das Schichtsystem eine Folge von wenigstens drei Interferenzschichten (2a,2b,2c) wechselnder Brechzahl (n) umfasst,
   oder eine Schicht mit in Richtung senkrecht zur Oberfläche stetig variierender Brechzahl (n) umfasst, welche Schicht näherungsweise als Folge von wenigstens drei Interferenzschichten (2a,2b,2c) wechselnder Brechzahl (n) aufgefasst werden kann,
   (b) das Schichtsystem direkt auf der Oberfläche des transparenten Körpers (1) angeordnet ist, und
   (c) die beschichtete Oberfläche des transparenten Körpers (1) in eine Mehrzahl von Oberflächenbereichen (O1,O2,O3) unterteilt ist, in denen die Dicke und/oder die Brechzahl (n) wenigstens einer der Interferenzschichten (2a,2b,2c) jeweils einen anderen Wert besitzt.

2. Dekorierter Gegenstand nach Anspruch 1, dadurch gekennzeichnet, dass der transparente Körper (1) aus Glas besteht.

3. Dekorierter Gegenstand nach Anspruch 1, dadurch gekennzeichnet, dass die Interferenzschichten (2a,2b,2c) aus Titanoxid oder Siliziumoxid oder einer Mischung aus diesen Oxiden bestehen.

**Claims**
**Claims for the following Contracting States : CH, FR, GB, LI**

1. Decorated article having a transparent glass body (1) on the surface of which there is provided a layer system for producing interference effects, characterised in that
   (a) the layer system comprises a sequence of at least three interference layers (2a, 2b, 2c) having an alternating refractive index (n),
   or comprises one layer having a refractive index (n) which varies continuously in the direction perpendicular to the surface, which layer can be construed approximately as a sequence of at least three interference layers (2a, 2b, 2c) having an alternating refractive index (n),
   (b) the layer system is arranged directly on the surface of the transparent body (1) and
   (c) the laminated surface of the transparent body (1) is divided into a plurality of surface regions (O1, O2, O3) in which the thickness and/or the refractive index (n) of at least one of the interference layers (2a, 2b, 2c) possesses a different value in each case.

2. Decorated article according to claim 1, characterised in that the interference layers (2a, 2b, 2c) consist of titanium oxide or silicon oxide or a mixture of these oxides.

**Claims for the following Contracting States : IT, SE**

1. Decorated article having a transparent body (1) on the surface of which there is provided a layer system for producing interference effects, characterised in that
   (a) the layer system comprises a sequence of at least three interference layers (2a, 2b, 2c) having an alternating refractive index (n),
   or comprises one layer having a refractive index (n) which varies continuously in the direction perpendicular to the surface, which layer can be construed approximately as a sequence of at least three interference layers (2a, 2b, 2c) having an alternating refractive index (n),
   (b) the layer system is arranged directly on the surface of the transparent body (1) and
   (c) the laminated surface of the transparent body (1) is divided into a plurality of surface regions (O1, O2, O3) in which the thickness and/or the refractive index (n) of at least one of the interference layers (2a, 2b, 2c) possesses a different value in each case.

2. Decorated article according to claim 1, characterised in that the transparent body (1) consists of glass.

3. Decorated article according to claim 1, characterised in that the interference layers (2a, 2b, 2c) consist of titanium oxide or silicon oxide or a mixture of these oxides.

**Revendications**
**Revendications pour les Etats contractants suivants : CH, FR, GB, LI**

1. Objet décoré, lequel comporte un corps en verre transparent (1), sur la surface duquel est prévu un système de couches pour créer des effets d'interférence,
   caractérisé en ce que :
   (a) le système de couches comporte une série d'au moins trois couches d'interférence (2a,2b,2c) d'indices de réfraction (n) variables,
   ou comporte une couche à indice de réfraction (n) continuellement variable perpendiculairement à la surface, laquelle couche peut être considérée, de façon approximative, comme une serie d'au moins trois couches d'interférence (2a,2b,2c) d'indices de réfraction (n) variables,
   (b) le système de couches est agencé directement sur la surface du corps transparent (1), et
   (c) la surface enrobée du corps transparent (1) est subdivisée en une pluralité de zones de surface (O1,O2,O3), dans lesquelles l'épaisseur et/ou l'indice de réfraction (n) d'au moins une des couches d'interférence (2a,2b,2c) possèdent, à chaque fois, une autre valeur.

2. Objet décoré selon la revendication 1,
   caractérisé en ce que les couches d'interférence (2a,2b,2c) sont constituées d'oxyde de titane ou d'oxyde de silicium ou d'un mélange de ces oxydes.

**Revendications pour les Etats contractants suivants : IT, SE**

1. Objet décoré, lequel comporte un corps transparent (1), sur la surface duquel est prévu un système de couches pour créer des effets d'interférence,
   caractérisé en ce que :
   (a) le système de couches comporte une série d'au moins trois couches d'interférence (2a,2b,2c) d'indices de réfraction (n) variables,
   ou comporte une couche à indice de réfraction (n) continuellement variable perpendiculairement à la surface, laquelle couche peut être considérée, de façon approximative, comme une série d'au moins trois couches d'interférence (2a,2b,2c) d'indices de réfraction (n) variables,
   (b) le système de couches est agencé directement sur la surface du corps transparent (1), et
   (c) la surface enrobée du corps transparent (1) est subdivisée en une pluralité de zones de surface (O1,O2,O3), dans lesquelles l'épaisseur et/ou l'indice de réfraction (n) d'au moins une des couches d'interférence (2a,2b,2c) possèdent, à chaque fois, une autre valeur.

2. Objet décoré selon la revendication 1,
   caractérisé en ce que le corps transparent (1) est en verre.

3. Objet décoré selon la revendication 1,
   caractérisé en ce que les couches d'interférence (2a,2b,2c) sont constituées d'oxyde de titane ou d'oxyde de silicium ou d'un mélange de ces oxydes.

A          B

$I_A$

$I_B$

<u>1</u>

$R.I_A$

$(1-R)I_B$

$I$

FIG.1

2

<u>3</u>

FIG.2A

2          4

<u>1</u>

FIG.2B

2 a

2 b

2 c

<u>1</u>

FIG.3

FIG.4A

FIG.4B

FIG.5

FIG.6A     FIG.6B     FIG.6C

FIG.7

FIG.8

FIG.9